# EUROPEAN PATENT APPLICATION

(11) **EP 2 595 078 A1**
(43) Date of publication of application: **22.05.2013**
(21) Application number: 11306525.4
(22) Date of filing: 21.11.2011
(51) Int. Cl.: G06F 21/00

(54) **Method and apparatus for managing DRM information in a network**

(71) Applicant: Alcatel Lucent, 75007 Paris (FR)
(72) Inventor: Mampaey, Marcel, 1090 Brussel (BE)
(74) Representative: Beck, Michaël Andries T

(57) **Abstract**

A method for managing DRM information in a network, said method comprising at a node in said network: detecting a first requesting entity requiring a first license associated with a target program under a first target DRM scheme; and in response to said detecting, obtaining and storing said first license and a second license, said second license being associated with said target program under a second target DRM scheme, and providing said first license and said second license to said first requesting entity.

## Description

### Field of Invention

The present invention pertains to the field of digital rights management (DRM), and in particular to facilitating the coexistence of multiple DRM technologies in a networked environment.

### Background

In the Digital Rights Management (DRM) content protection technology domain, there exist ecosystems that allow inter-operation between multiple DRM systems (cfr. Digital Entertainment Content Ecosystem - DECE Consortium).

In such a scheme, DRM License Acquisition needs to be performed multiple times (once per DRM) for any downloaded (or streamed) content file, and the result can be cached in the downloaded file (or recorded file if recording while streaming is authorized). A content file, whether made available for downloading or streaming, will hereinafter be referred to as a "program".

However, the License Acquisition is always done on an "as needed" basis, while at the same time users are allowed to exchange and copy files freely. As a result users will end up having multiple copies of the file with incomplete license information and users will not understand what to do with these multiple copies and will end up deleting files with validly acquired licenses, thereby causing a lot of burden and frustration to the user.

Today, users would either have to keep track of what they do with content files embedding licenses, or never keep multiple copies of content files but rather move them and update them. However, users usually do not understand these DRM issues and are likely to make a wrong manipulation thereby losing validly acquired licenses in files. There is no technical support yet to prevent this problem as these ecosystems are quite new and have not been widely deployed in the past.

### Summary

Accordingly, it is an object of embodiments of the present invention to facilitate and/or automate the acquisition and management of licenses for the benefit of various content reproduction devices in a network.

According to an aspect of the invention, there is provided a method for managing DRM information in a network, said method comprising at a node in the network: detecting a first requesting entity requiring a first license associated with a target program under a first target DRM scheme; and, in response to said detecting, obtaining and storing the first license and a second license, the second license being associated with the target program under a second target DRM scheme, and providing the first license and the second license to the first requesting entity.

It is an advantage of embodiments of the present invention that licenses for a given program of interest are acquired proactively for a plurality of DRM schemes, as soon as the need for a single license is detected.

The detection of the requesting entity can happen as a result of an explicit request for a specific license, which is received or intercepted at the node according to the invention. The detection can also be the result of an implicit request, such as an attempt to download, stream, copy, or move a program, which attempt is detected or intercepted by the node according to the invention, whereby this node is capable of associating the requesting entity with a particular type of license, for instance by means of a DRM scheme table kept for that purpose, or by directly interrogating the requesting entity.

It is a further advantage of the invention that complete sets of licenses are passed on from the node according to the invention to the requesting entity/entities. As a result, these sets can be passed around within the subscriber's local network (optionally within the constraints imposed by the respective licensors), such that subsequent devices that receive an instance of the set may find a license that is useful for them in the set. The providing of the first license and the second license may happen as part of a single metadata file. The licenses may be provided separately, or jointly with the associated program file.

In an embodiment, the method according to the present invention further comprises at said node: detecting a second requesting entity requiring the second license; and in response to the second request, retrieving the stored first license and the stored second license and providing the retrieved first license and the retrieved second license to the second requesting entity.

It is an advantage of this embodiment, that subsequent license requests (explicit or implicit) are responded to on the basis of cached licenses, thus avoiding license acquisition delays in subsequent license requests pertaining to the same program. When a program is downloaded, streamed, copied, or moved via the node according to the invention, the targeted copy of the program can be automatically augmented with the cached licenses.

In an embodiment of the method according to the present invention, the first requesting entity and/or said second requesting entity comprises content playing software running at the node, and the detecting of said respective first and/or second requesting entity requiring a license comprises detecting an API call from the content playing software.

This embodiment pertains *inter alia* to situations where the means to carry out the method according to the invention and a media player (requesting entity) are combined in a single device. It is an advantage of this embodiment that the node responsible for proactive license acquisition may be a media player. The media player software may request an appropriate license for its own use upon the first attempt to play a program. This request - which remains internal to the device - triggers the further steps of the present invention if it is indeed the first request, so as to populate a cache of licenses for the same program under various DRM schemes. If the internal request is not the first request, a prior request, e.g. from a different requester, will have triggered the preparation of the license cache, and a stored license will be available.

In an embodiment of the method according to the present invention, the first requesting entity and/or the second requesting entity comprises a device attached to the network, and detecting of the respective first and/or second requesting entity requiring a license comprises receiving a message from the device over the network.

This embodiment pertains *inter alia* to situations where the means to carry out the method according to the invention and a media player (requesting entity) are separate devices, connected to each other via a network. It is an advantage of this embodiment that the node responsible for proactive license acquisition may be a media gateway. The various media players attached to the media gateway may request a program, or an appropriate license for their own use upon the first attempt to play a program. Such requests are transmitted to the gateway over the (local) network, wherein the first such request for any given program triggers the further steps of the present invention, so as to populate a cache of licenses for the same program under various DRM schemes.

In an embodiment of the method according to the present invention, the storing of the first license and the second license comprises creating or updating a file comprising metadata, the metadata including encrypted license keys associated with the first license and the second license.

It is an advantage of this embodiment that the storage of license information may be separated from the storage of the program data. It is a further advantage of this embodiment that information about different licenses for a given program under various DRM schemes may be combined in a single file. The file may be formatted according to the Protected Interoperable File Format (PIFF) defined by Microsoft Corporation or according to the Common File Format (CFF) defined by the DECE standard (publicly available at http://www.uvvu.com/docs/public/Tech_Spec_Package-public.zip).

In an embodiment of the method according to the present invention, the providing the first license and the second license comprises providing the file comprising the metadata.

It is an advantage of this embodiment that a collection of licenses may be provided in a single file, to ensure that later recipients of the same file have maximal chances of finding a license which is appropriate for their DRM scheme. It is a further advantage of this embodiment that the transmission of license information may be separated from the transmission of program data.

In a particular embodiment, the file further comprises program content.

In an embodiment of the method according to the present invention, the detecting of the respective first and/or second requesting entity requiring a license comprises detecting that the respective first and/or second requesting entity attempts to download, stream, copy, or move a program file.

It is an advantage of this embodiment that the requesting entities can be media players that are not specifically configured to interact with the node. It surrices that the node is placed in a topologically appropriate point in the network (e.g. as a residential gateway in the home network) to allow it to intercept communications pertaining to the normal operation of the media players. The node/gateway may then be configured to detect the need for a particular license on the basis of the intercepted communications.

According to an aspect of the invention, there is provided a computer program configured to cause a processor to perform a method as described above.

According to an aspect of the invention, there is provided an apparatus for managing DRM information in a network, the apparatus comprising: a first network interface for communicating with a subscriber-side network; a second network interface for communicating with a provider-side network; a file storage interface for storing and retrieving files stored at a file storage; and a processing unit; wherein the processing unit is configured to: receive a first signal from a first requesting entity via the first network interface, the first requesting entity requiring a first license associated with a target program under a first target DRM scheme; acquire, in response to said receiving, the first license and a second license from respective license servers via the second network interface, the second license being associated with said target program under a second target DRM scheme; store said first license and said second license in the file storage attached to the file storage interface; and provide the first license and the second license to the first requesting entity via the first network interface.

In an embodiment of the apparatus according to the present invention, said processing unit is further configured to: receive a second signal from a second requesting entity via said first network interface, said second requesting entity requiring the second license; retrieve the second license from the file storage attached to the file storage interface; and provide the first license and the second license to the second requesting entity via the second network interface.

In an embodiment, the apparatus according to the present invention further comprises a storage device operatively connected to said file storage interface.

The advantages of the apparatus according the present invention are analogous to the advantages described above for the methods according to the present invention.

According to an aspect of the invention, there is provided a media gateway comprising the apparatus described above.

The media gateway may combine the features of the present invention with media file storage and/or replay functionality.

According to an aspect of the invention, there is provided a residential gateway comprising the apparatus described above.

The residential gateway may combine the features of the present invention with subscriber line termination (modem) functions, switching, and/or routing.

According to an aspect of the invention, there is provided an access node comprising the apparatus described above.

The access node may combine the features of the present invention with subscriber line termination (modem) functions and/or centralized storage.

### Brief Description of the Figures

Some embodiments of apparatus and/or methods in accordance with embodiments of the present invention are now described, by way of example only, and with reference to the accompanying drawings, in which:
Figure 1 illustrates an exemplary network in which methods and apparatus according to the present invention may be used;
Figure 2 provides a schematic view of an apparatus according to an embodiment of the present invention;
Figure 3 provides a flow chart of a method according to an embodiment of the present invention;
Figure 4 provides a message exchange diagram for a method according to an embodiment of the present invention; and
Figure 5 provides a flow chart of another method for managing DRM information in a network.

### Detailed Description of Embodiments

The present invention is based on the insight of the inventor that it is advantageous to allow consumer devices at home to transparently manage license information from content files on behalf of the user or on behalf of each other.

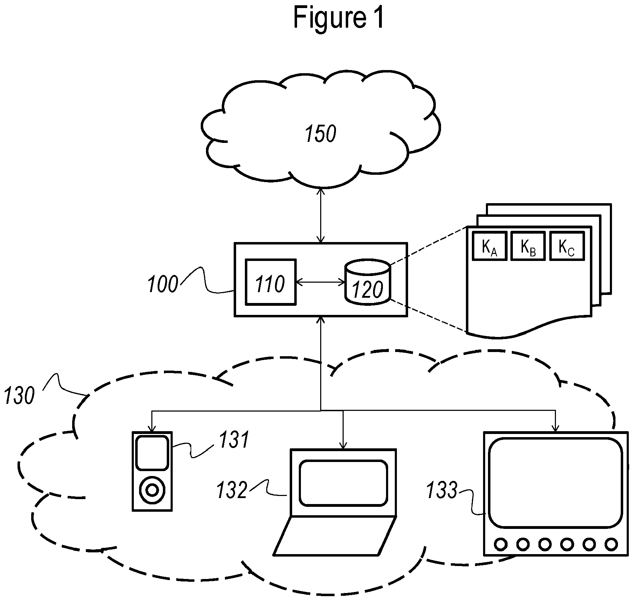

Figure 1 illustrates an exemplary network in which methods and apparatus according to the present invention may be used. Three consumer electronics devices are shown: a portable media player **131,** a laptop computer **132,** and a television set **133.** The skilled person will understand that the principles of the invention apply to any number of devices, and to any type of device, provided that the device is capable of performing certain actions with respect to DRM-protected content. When reference is made to particular illustrated devices as "a first device" or "a second device", this is done without loss of generality.

Figure 1 further illustrates a gateway device **100,** connected to a provider-side network **150,** such as the Internet, and to subscriber-side network **130,** such as a home network.

In the illustrated case, the gateway device **100** is part of the home network, and as such it may be integrated with a modem and provide additional home gateway functions such as firewalling, web caching, switching and routing, etc. The gateway device **100** may also be part of a media center in the home network. A single gateway device **100** would typically serve the needs of a single household, which includes multiple DRM domains registered with this household.

The gateway device **100** may alternatively be integrated in an access node such as a DSLAM. In that case, the subscriber-side network **130** includes the access link (e.g., an xDSL, EFM, or xPON link).

The gateway device **100** is illustrated as a device comprising a processing unit **110** and a storage **120,** although other physical implementations are of course possible. The storage **120** is adapted to store licenses for content files and may also serve as storage for the content files themselves; in particular, the storage **120** is capable of storing and retrieving a number of different licenses, issued by different license servers for use with different DRM schemes, pertaining to the same content file.

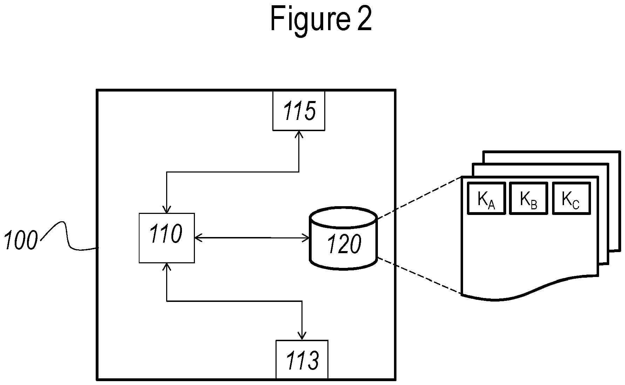

Figure 2 provides a more detailed schematic view of the gateway device **100** of Figure 1. The device **100** comprises a first interface **113,** configured to communicate with the subscriber-side network **130,** preferably a home network. The device **100** further comprises a second interface **115,** configured to communicate with the provider-side network **150,** preferably the Internet, or an access network providing access to the Internet.

The term "interface" is meant to include the hardware and software that is necessary to exchange messages with other devices on the network, according to appropriate protocols as are well known to persons skilled in the art. The subscriber-side network may be a local area network, consisting for example of one or more segments according to standards including IEEE 802.3 Ethernet, IEEE 802.11 Wireless LAN, IEEE 802.15 Wireless PAN, MoCA, HPNA, Power Line Communication, etc. The provider-side network may consist, without limitation, of one or more segments according to standards including IEEE 802.3 Ethernet, IEEE 802.16 Wireless MAN, Digital Subscriber Line standards (including ADSL, VDSL, HDSL, and SHDSL), Passive Optical Network standards (including EPON and GPON), and mobile standards (including GSM, CDMA, EDGE, UMTS, and LTE).

A processing unit **110** is provided to receive license request signals from devices **131, 132, 133** in the subscriber-side network **130.** By "request signal" is meant any message explicitly requesting a particular license for a particular program under a particular DRM scheme, but also any other message from which it may be deduced that the requesting entity requires or will require a particular license for a particular program under a particular DRM scheme, such as an attempt to download, stream, copy, or move a program.

The devices **131, 132, 133** may be configured to direct their license requests directly to gateway device **100;** alternatively, the devices may be configured to attempt to contact a license server via the service provider network **150,** in which case the gateway device **100** may intercept the license request messages and act upon them as necessary.

Processing unit **110** is illustrated as being directly connected to a file storage **120** which is internal to the gateway device **100.** This means that the storage interface of the processing unit **110** is an internal interface in the illustrated case. It is possible, without departing from the principles of the invention, to provide an exposed storage interface, in which case file storage **120** is not a part of the gateway device **100;** the file storage **120** may be implemented as an external hard disk drive, a network attached storage (NAS), a storage area network (SAN), or an Internet-based storage service (also referred to as storage in the cloud); in addition, the file storage **120** may be centralized or distributed over several nodes.

In a deployment model according to the principles of the present invention, an entity acting as a "DRM proxy" is deployed for each user or household (group of users in a single dwelling). This entity substantially comprises a DRM client for each DRM scheme under which any of the registered devices of the user or household is configured to operate.

The DRM proxy can run in a consumer device at home, in a media gateway, in a cable or DSL modem, or in a network node such as e.g. the ISAM, or be implemented in the cloud or at a service provider on behalf of the user. Without loss of generality, the DRM proxy will hereinafter be assumed to run in a gateway device **100** as described above.

The processing unit **110** analyzes a license request signal received from a first device **131,** to determine to which content the request pertains, and which types of licenses are required (i.e., for what type of use and for which DRM scheme) for the devices **131-133** in the network **130.** The processing unit **110** then verifies whether the requested licenses are present in the file storage **120.**

The gateway device **100** has means to find out which licenses are needed for a given requested program. These means may comprise a table listing all registered home devices and their associated DRM schemes, whereby registration may take place manually or automatically (e.g., through a Plug-and-Play protocol). Additionally or alternatively, these means may comprise a program broadcasting an identification request to all devices present in the network.

If the license provisioning is triggered by an attempt to download, stream, copy, or move a program file, the program file is preferably passed on in a format such as the aforementioned PIFF format or CFF format. These formats are based on the ISO 14496-12 format, which is modular and made of "boxes" of data; they provide a convenient container for combining content files and metadata including (references to) licenses under a variety of DRM schemes. An intermediary element such as the gateway device **100** may be configured to read the boxes that contain metadata in the clear, and hence to identify the program, in particular if the metadata comprises a universally unique identification such as the Asset Logical Identification (ALID) field defined in the DECE specification. The gateway device **100** may also be configured to identify the format of the program (e.g. "high definition", "standard definition", or "portable definition", as defined in the DECE specification). The gateway device **100** may be configured to verify, on the basis of these identifications and a list of registered devices within the household, which devices are capable of using the program in the format in which it is present, and which are the DRM schemes associated with these devices, i.e. which particular licenses are required for interchangeable use of the particular content between the devices that support the format in question. Once these particular licenses have been obtained, they can be inserted in the ISO-formatted program file in accordance with the chosen format (e.g. PIFF or CFF).

If the required licenses are not present in the file storage **120,** the request is a first request for the concerned program. Acting as a proxy, the gateway device **100** will contact the appropriate license servers via the second interface **115** and obtain the required licenses. A copy of these required licenses may be stored in the file storage **120.** All obtained licenses are then immediately available for future requests.

The originally requested license is provided to the requesting node via the first interface **113.** The additional licenses are transmitted along with the requested license - e.g. in a combined metadata file, preferably formatted according to the PIFF or CFF format - such that future copies of the combined license file can be used as such by other media players in the same household. Preferably, the required licenses are transmitted along with the targeted program file, most preferably in a file formatted according to the PIFF or CFF format.

Alternatively, a license acquisition may be performed in the first device that downloads the file (i.e., any media player device may act as the DRM proxy for a given file), such that the downloaded file is immediately equipped with a license for the DRM scheme supported by this device before it is passed around to other media players within the same household. In this case, the gateway device **100** may be configured to obtain the cached license from the first device that performs a license acquisition in each DRM scheme. In order to achieve this, the gateway device **100** will communicate and interact with each household device to obtain the cached license whenever a new program file has been intercepted by the gateway device **100** and the corresponding license has been acquired by said respective first device for each DRM scheme that is being used in the household.

The gateway device **100** may be configured to obtain in advance the list of devices and associated formats and DRM schemes from a central entity in the network such as the "Coordinator" defined in the DECE specification, or it will request such a list on a need-to-know basis. The gateway device **100** may comprise a DRM client for each DRM scheme that is being used in the household according to said list.

The described DRM proxy may only need to implement a small part of each DRM client that needs to be supported, i.e., the part that implements the License Acquisition. At first download, the DRM proxy will perform a license acquisition for all supported DRMs.

Hence, two objectives are attained by embodiments of this method:
1. The downloaded file is immediately playable by any device the user may have registered in the system.
2. Any copy of the file made after download will contain all licenses required in the household.

In a variant, all downloaded files are stored in a media center, be it located in the home or in the network or in the cloud. Any device copying the file from the media center and performing a license acquisition will then also provide the resulting valid license back to the media center. In the end, the files in the media center will contain all required licenses and no further licensing is needed.

In another variant, only the metadata of the downloaded files (this includes the cached licenses) are stored in a media center, be it located in the home or in the network or in the cloud. Any device that holds a copy of the file and performing a license acquisition will also provide the resulting valid license back to the media center. Whenever a file is copied, the metadata of the copied file is merged with metadata coming from the media center. In the end, the metadata in the media center will contain all required licenses and no further licensing is needed. This requires the media file to include a reference to the metadata storage for that file in the media center for convenience.

Additional intelligence can also be added to the Operating System (OS) of media devices to handle metadata of any files being copied in or out in the proper manner such as to always use merged metadata license information. Whenever files are deleted, or overwritten, the OS should take care that metadata is either merged or backed up to prevent loss of valuable licenses.

When the consumer acquires a new device that supports a DRM for which no license has been acquired yet, the DRM proxy or the media center could perform license acquisition on behalf of the new device in order to make files playable more rapidly for the consumer.

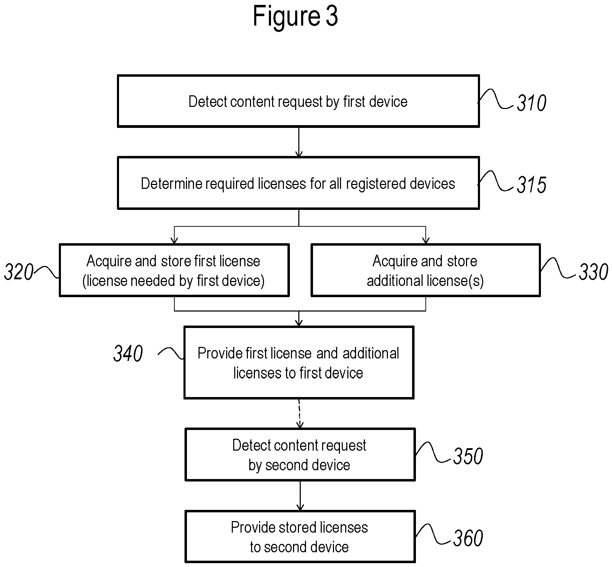

Figure 3 provides a flow chart of a method according to an embodiment of the present invention.

The method of Figure 3 is assumed to be carried out by a gateway device **100** as described above. The operation of the gateway device **100** may be summarized as aiming to facilitate the acquisition of program licenses, by pro-actively and automatically acquiring multiple licenses for a given program (under different DRM schemes) when a first license is being requested for this program. Particular features, options, and details described above in connection with the gateway device **100** according to the invention, apply to the same extent to the methods described below, and will not be explicitly repeated.

It should be noted that the steps carried out by the gateway device **100** in the method as presently described, may also be carried out by a content playing device, in which case the gateway device **100** is virtually embedded in said content playing device. It must be noted that the operations of the gateway device **100** require network communication capabilities in order to communicate with license servers. Hence, in the case of a gateway device **100** virtually embedded in a content playing device, this content playing device needs to have a network interface; this may be a "true" network interface, i.e. one that allows the exchange of messages via a general-purpose data network such as IEEE 802.3 Ethernet or IEEE 802.11 Wireless LAN, or a "tethering interface", i.e. one that allows the device to establish a point-to-point link with another device that, in turn, has a "true" network interface.

In a first step **310** of the illustrated method, the gateway device **100** detects that a first device **131** requires a license for a particular program under a particular DRM scheme. This detection may involve receiving a concrete request for a particular license, or it may involve intercepting an attempt by the first device **131** to download, stream, copy, or move a program file, as a result of which the gateway device **100** will infer that a license is required.

The gateway device **100** honors the first device's requirement in the next steps by performing the necessary license acquisition **320,** if necessary through interaction with a license server, wherein the acquired license is also stored locally (i.e., cached).

However, in an additional step, which is preferably carried out at least partially in parallel with the aforementioned step **320,** the gateway device **100** performs license acquisition to obtain and store **330** licenses for the same program under one or more other DRM schemes.

For this purpose, as illustrated in step **315,** the gateway device **100** determines, on the basis of the target content (including the identity of the program, and the format in which it is being requested) which licenses are required to ensure maximum interoperability between the devices present in the household.

The gateway device **100** is preferably configured with a list of DRM schemes of interest, and the respective license servers providing licenses for them. This list may be stored/programmed at one particular time, but it may additionally or alternatively be a dynamic list that gets updated through a registration and deregistration process whenever new content playing devices are added to or removed from the household's collection. The registration and deregistration process may be automated, preferably by using a "plug-and-play" auto-configuration mechanism. Note that the gateway device **100** may be capable of being configured to refrain from automatically acquiring licenses for every program for certain registered content playing devices, as license acquisition may be costly.

In a subsequent step **340,** the additional licenses are provided to the first device **131** along with the originally required license. This has the advantage of distributing a comprehensive set of licenses that may be exchanged between devices **131-133** within the household even without further involvement of the gateway device **100.** The licenses are preferably bundled with the program in an appropriate file, most preferably a file formatted according to the CFF or PIFF format.

The gateway device **100** may now detect **350** that a second device **132** requires a license for the same particular program under a different DRM scheme. The detection in this step **350** may take place in similar ways as described above in connection with the detection of the first device in the first step **310.** Assuming that the DRM scheme required by the second device **132** is among those for which an additional license was acquired during the first part of the described method, in particular in step **330,** the gateway device **100** is now capable of providing **360** the requested license to the second device **132** directly from storage, without incurring the usual delay caused by interaction with a license server. The second license is preferably provided to the second device in the same manner as the provision of the first license in step **340.**

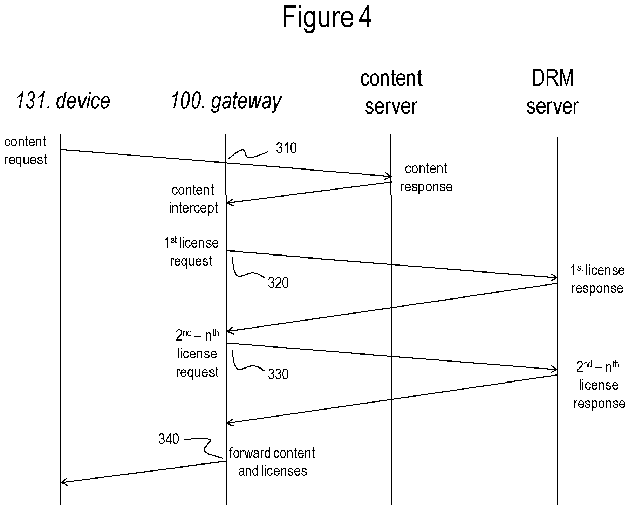

Figure 4 illustrates an exemplary interaction between a first device **131,** a gateway device **100,** a content server, and a DRM server, in carrying out steps **310-320** of the method illustrated in Figure 3. The illustrated interaction is triggered by a request from the first device **131** to obtain a certain program from the content server ("content request"). Thanks to a judicial home network topology, this request passes through the gateway device **100,** where it is preferably intercepted or detected **310.** The actual response from the content server is intercepted ("content intercepted"), and held at the gateway device **100** while the license acquisition process is in course. Without loss of generality, Figure 4 separately illustrates a 1^{st} license request-response interaction **320** between the gateway device **100** and a DRM server, and an indeterminate number of additional license request-response interactions **330** between the gateway device **100** and respective DRM servers (for clarity purposes, the DRM servers are illustrated as a single instance, while in reality different licenses may be obtained from different servers). At the conclusion of the license acquisition process, the program file and the acquired licenses are forwarded **340** to the first device **131,** preferably as a bundled file, most preferably formatted according to the CFF or PIFF file format.

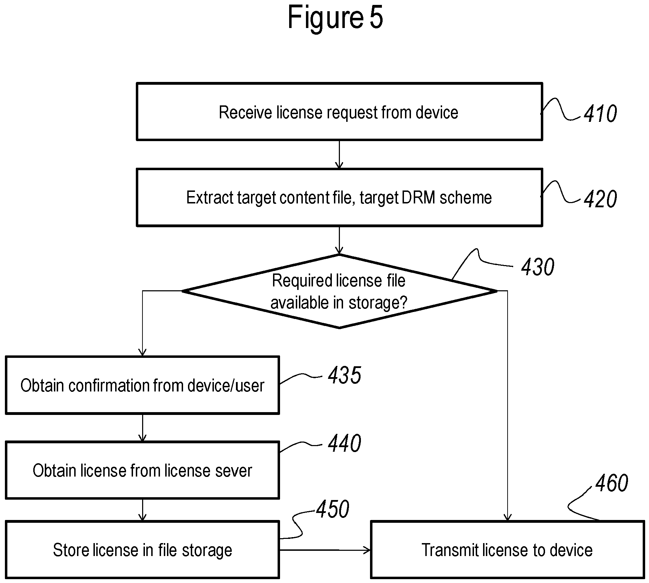

Figure 5 provides a flow chart of another method for managing DRM information in a network, in particular by using the gateway device **100** as a DRM proxy or cache, in accordance with another deployment model.

In a first step **410,** the gateway device **100** receives a request from a device **131-133** in the subscriber-side network **130.** The gateway device **100** parses this request in a second step **420** to detect for which program a license is requested, and under which DRM scheme the license must be provided - the skilled person will appreciate that this step may be more or less complex depending on the format of the request message. The gateway device **100** verifies **430** whether an appropriate license is already available at the file storage **120.** If so, a copy of the appropriate license is transmitted **460** to the requesting device. If not, the license may be obtained **440** from a license server, stored **450** in the file storage, and transmitted **460** to the requesting device. The requesting device **131** may thus obtain an appropriate license via the gateway device **100,** regardless of whether the license was already available at the file storage **120,** without noticing the difference.

As obtaining a fresh license **440** from the license server may involve a commercial transaction, embodiments of the method according to the present invention may include an additional step **335** in which license purchasing confirmation is requested from the requesting device **131.** This confirmation may be given autonomously by the device on the basis of a preconfigured policy, or it may involve interaction with a human user of the device. Alternatively, the gateway device **100** may be configured with a policy to autonomously decide in which cases a license may be acquired from a license server.

For clarity reasons, the description of individual methods and apparatus according to the present invention has focused on particular features. It will be clear to a person skilled in the art, that features described in conjunction with a particular method or apparatus retain their applicability and advantages when used in conjunction with other methods or apparatus, and such cross-combinations are hereby expressly included.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for managing DRM information in a network, said method comprising at a node in said network:
- detecting a first requesting entity requiring a first license associated with a target program under a first target DRM scheme; and
- in response to said detecting, obtaining and storing said first license and a second license, said second license being associated with said target program under a second target DRM scheme, and providing said first license and said second license to said first requesting entity.

2. The method according to claim 1, further comprising at said node:
- detecting a second requesting entity requiring said second license; and
- in response to said second detecting, retrieving said stored first license and said stored second license and providing said retrieved first license and said retrieved second license to said second requesting entity.

3. The method according to claim 2, wherein said first requesting entity and/or said second requesting entity comprises content playing software running at said node, and wherein said detecting of said respective first and/or second requesting entity requiring a license comprises detecting an API call from said content playing software.

4. The method according to claim 2 or 3, wherein said first requesting entity and/or said second requesting entity comprises a device attached to said network, and wherein detecting of said respective first and/or second requesting entity requiring a license comprises receiving a message from said device over said network.

5. The method according to any of the preceding claims, wherein said storing of said first license and said second license comprises creating or updating a file comprising metadata, said metadata including encrypted license keys associated with said first license and said second license.

6. The method according to claim 5, wherein said providing said first license and said second license comprises providing said file comprising said metadata.

7. The method according to claim 6, wherein said file further comprises program content.

8. The method according to any of the preceding claims, wherein said detecting of said respective first and/or second requesting entity requiring a license comprises detecting that said respective first and/or second requesting entity attempts to download, stream, copy, or move a program file.

9. A computer program configured to cause a processor to carry out the method according to any of the preceding claims.

10. An apparatus for managing DRM information in a network, said apparatus comprising:
- a first network interface for communicating with a subscriber-side network;
- a second network interface for communicating with a provider-side network;
- a file storage interface for storing and retrieving files stored at a file storage; and
- a processing unit;
wherein said processing unit is configured to:
- receive a first signal from a first requesting entity via said first network interface, said first requesting entity requiring a first license associated with a target program under a first target DRM scheme;
- acquire, in response to said receiving, said first license and a second license from respective license servers via said second network interface, said second license being associated with said target program under a second target DRM scheme;
- store said first license and said second license in said file storage attached to said file storage interface; and
- provide said first license and said second license to said first requesting entity via said first network interface.

11. The apparatus according to claim 10, wherein said processing unit is further configured to:
- receive a second signal from a second requesting entity via said first network interface, said second requesting entity requiring said second license;
- retrieve said second license from said file storage attached to said file storage interface, and
- provide said first license and said second license to said second requesting entity via said second network interface.

12. The apparatus according to claim 10 or 11, further comprising a storage device operatively connected to said file storage interface.

13. A media gateway comprising the apparatus of any of claims 10-12.

14. A residential gateway comprising the apparatus of any of claims 10-12.

15. An access node comprising the apparatus of any of claims 10-12.
